# FASCICULE DE BREVET EUROPEEN

(11) **EP 2 212 139 B1**
(45) Date de publication et mention de la délivrance du brevet: **28.12.2011**
(21) Numéro de dépôt: 08843629.0
(22) Date de dépôt: 31.10.2008
(51) Int. Cl.: B60J 1/18, B62D 29/04, B60J 5/10, B62D 65/06, B62D 65/08, B62D 25/10, B60J 5/12

(54) **ENSEMBLE D'UN CAISSON DE HAYON ET D'UNE PIECE DESTINEE A ETRE RAPPORTEE SUR LE CAISSON**
ANORDNUNG AUS EINER HECKSCHEIBENKLAPPE UND AUS EINER AN DER KLAPPE ANZUBRINGENDEN KOMPONENTE
ASSEMBLY OF A TAILGATE SHELL AND OF A COMPONENT INTENDED TO BE ATTACHED TO THE SHELL

(30) Priorité: 31.10.2007 FR 0758741
(43) Date de publication de la demande: 04.08.2010
(73) Titulaire: Compagnie Plastic Omnium, 69007 Lyon (FR)
(72) Inventeur: LETERRIER, Franck, F-69800 Saint Priest (FR); HACHE, Bertrand, F-07430 Saint Cyr (FR)
(74) Mandataire: Remy, Vincent Noel Paul
(86) Numéro de dépôt international: PCT/FR2008/051969
(87) Numéro de publication internationale: WO 2009/056775

(56) Documents cités:
- EP-A- 0 695 848
- EP-A- 1 120 303
- EP-A- 1 803 597
- DE-A1- 2 935 230
- FR-A- 2 768 085
- JP-A- 6 219 157
- US-A- 6 053 562

## Description

La présente invention concerne le domaine technique des hayons de véhicule automobile.

On connaît, dans l'état de la technique, un caisson de hayon comprenant des parties inférieure et supérieure destinées chacune à être recouverte par une peau de carrosserie, les parties supérieure et inférieure étant reliées entre elles par l'intermédiaire de deux montants latéraux entre lesquels est prévue une ouverture destinée à accueillir une lunette.

Un tel caisson est réalisé en tôle et est constitué par des profilés fermés. La lunette est rapportée sur le caisson par collage, le caisson comprenant à cet effet une piste de collage continue. Une ou plusieurs peaux de carrosserie sont également rapportées par collage sur le caisson, pour former le hayon, également à l'aide de pistes de collage continues. De telles pistes permettent d'assurer l'étanchéité du caisson.

Toutefois, les coûts de fabrication d'un tel hayon sont relativement importants, notamment du fait du procédé de mise en forme de la tôle.

L'invention a pour but de remédier à ces inconvénients en fournissant un ensemble permettant de former un hayon de fabrication peu coûteux et respectant le cahier des charge habituel d'un hayon à savoir être étanche et obturer de manière étanche l'arrière du véhicule.

A cet effet, l'invention a pour objet un ensemble d'un caisson de hayon et d'au moins une passerelle destinée à être rapportée sur le caisson, le caisson étant destiné à recevoir une pièce fixée au caisson par collage et ledit caisson comportant à cet effet une piste de collage. Le caisson comporte également au moins un montant latéral comprenant un profilé à section transversale ouverte dont l'ouverture interrompt la piste de collage. La passerelle comprend une portion complémentaire de piste de collage, la passerelle et le montant étant conformés pour que la passerelle puisse être rapportée sur le montant de manière à fermer la section transversale du profilé et à ce que la portion complémentaire comble l'interruption de la piste de collage.

Ainsi, du fait de sa forme ouverte, le caisson peut être fabriqué en matière plastique par moulage, procédé moins coûteux que l'emboutissage, en une seule opération de moulage et sans pièce mobile dans le moule, la forme du caisson permettant le démoulage par simple ouverture du moule.

En outre, malgré sa forme ouverte, le caisson n'est pas tenu d'être recouvert d'une peau unique de carrosserie pour assurer l'étanchéité du hayon. En effet, la passerelle assure une étanchéité suffisante du caisson à chaque interface des peaux de carrosserie entre elles ou des peaux de carrosserie avec la lunette, en fermant localement la section ouverte du profilé du caisson à l'endroit où les peaux ou la lunette sont collées.

Le hayon est donc encore meilleur marché. La fabrication de la peau de carrosserie en plusieurs éléments de formes simples et de dimensions réduites est en effet bien moins coûteuse que la fabrication de cette peau de carrosserie en une seule pièce, qui serait alors de forme plus complexe et nécessiterait un moule de dimensions supérieures.

En outre, le hayon étant fabriqué en matière plastique, il est plus léger que le hayon de l'état de la technique.

De plus, grâce aux passerelles, la liberté de conception du hayon est aussi grande que dans l'état de la technique. La forme du hayon n'empêche pas, par exemple, de rapporter la lunette par collage alors qu'elle doit recouvrir les montants latéraux pour s'étendre jusqu'aux extrémités latérales du hayon. L'étanchéité du hayon dans cette situation est en effet également assurée par les passerelles.

Dans un mode de réalisation particulier, la pièce comprend au moins un joint d'étanchéité constituant une extrémité de la passerelle destinée à accueillir la portion complémentaire de piste de collage. Ce joint permet de mieux assurer l'étanchéité de la liaison lunette-caisson, à l'interface de la passerelle et du caisson.

En effet, le joint travaille en compression entre la lunette et le caisson. Il épouse donc la forme du caisson et minimise donc le passage laissé entre le caisson et la passerelle, dans lequel l'eau pourrait s'introduire. L'étanchéité du hayon est donc encore mieux assurée. En outre, l'étanchéité est assurée pendant une longue durée, le joint en compression se fatiguant très peu.

Dans un mode de réalisation particulier, le joint est d'un seul tenant avec le reste de la passerelle. En particulier, la passerelle peut être fabriquée par co-moulage ou surmoulage. Cela permet de mieux assurer la continuité entre le joint et le reste de la pièce.

L'ensemble selon l'invention peut également comprendre l'une au moins des caractéristiques de la liste ci-dessous :
- le caisson et la passerelle comprennent des moyens de positionnement de la passerelle sur le caisson. De plus, la passerelle peut comprendre des moyens de positionnement de la pièce, de préférence des moyens de centrage de cette dernière. En particulier, la passerelle peut comprendre un orifice destiné à coopérer avec un doigt de positionnement ménagé dans la lunette,
- le caisson et la passerelle sont recouverts d'un même film de peinture continu, une fois la passerelle mise en place sur le caisson. Cela permet d'améliorer encore l'étanchéité à l'interface de ces deux éléments de l'ensemble
- la passerelle comprend des moyens de pré-maintien de la passerelle sur le caisson. En particulier, ces moyens peuvent comprendre une agrafe métallique destinée à se planter dans une nervure du caisson. Ainsi, la mise en place de la passerelle sur le caisson avant l'opération de peinture du caisson est facilitée,
- le caisson comprend deux pistes de collage pour recevoir deux pièces distinctes, la passerelle comprenant deux portions de pistes de collage, complémentaires respectivement des pistes de collage du caisson,
- le joint d'étanchéité s'étend entre deux extrémités adjacentes des deux portions de piste de collage. Cela permet d'améliorer encore l'étanchéité du hayon en améliorant l'étanchéité de la liaison passerelle-caisson. En effet, cette partie du joint travaille en compression car elle est entourée par deux parties du joint compressées chacune respectivement par une pièce que la piste de collage correspondante permet de coller,
- la passerelle comprend des moyens d'entretoisement d'une pièce et de la portion complémentaire de piste de collage destinée à recevoir cette pièce. Cela évite l'écrasement du cordon de colle sur la piste de collage et permet de ce fait un meilleur collage de la pièce sur le caisson et la passerelle,
- la passerelle comprend également des moyens de maintien d'au moins un câble installé dans le profilé.

Ainsi, la passerelle comporte de nombreux éléments fonctionnels supplémentaires permettant d'éviter de rapporter sur le caisson d'autres éléments remplissant ces fonctions.
- la passerelle ferme la section transversale d'au moins un profilé essentiellement sur toute sa longueur. Ainsi, la passerelle remplit une fonction esthétique en cachant le montant, celui-ci étant visible lorsque la lunette peut être ouverte. Cela évite d'intégrer encore une peau de carrosserie supplémentaire au caisson.
- la passerelle est réalisée au moins partiellement en ABS (AcryloButadiène Styrène). Cette matière permet en effet de réaliser à la fois le joint et le reste de la passerelle, la compatibilité de ces parties étant alors assurée. En particulier, le joint d'étanchéité est réalisé en un mélange d'ABS et d'élastomère.
- l'ensemble comprend quatre passerelles destinées à être rapportées chacune sur le caisson, au voisinage d'une extrémité d'un des montants.

L'invention a également pour objet une passerelle destinée à être rapportée sur un caisson de hayon de véhicule automobile et appartenant à un ensemble selon l'invention.

L'invention a également pour objet un caisson de hayon appartenant à un ensemble selon l'invention.

L'invention sera mieux comprise à la lecture de la description qui va suivre, donnée uniquement à titre d'exemple et faite en se référant aux dessins annexés dans lesquels :
- la figure 1 est une vue en perspective et schématique de l'ensemble selon un mode de réalisation particulier de l'invention, comportant un caisson de hayon et de passerelles destinées à être rapportées sur le caisson,
- la figure 2 est une vue d'un côté d'une passerelle de l'ensemble selon un mode de réalisation particulière de l'invention, destiné à être tourné vers l'extérieur du véhicule lorsque le hayon est monté sur le véhicule,

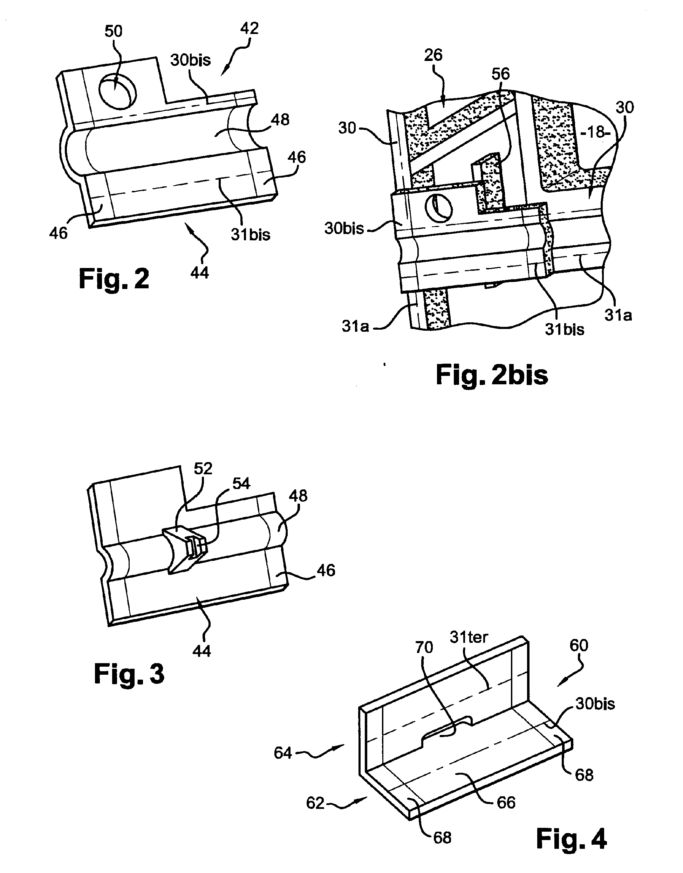

- la figure 2bis est une vue de la pièce de la figure 2 rapportée sur un caisson de hayon,
- la figure 3 est une vue d'un côté de la passerelle de la figure 2, destiné à être tourné vers l'intérieur du véhicule lorsque le hayon est monté sur le véhicule,
- la figure 4 est une vue d'un côté d'une passerelle selon un autre mode de réalisation de l'invention, destiné à être tourné vers l'extérieur du véhicule lorsque le hayon est monté sur le véhicule.

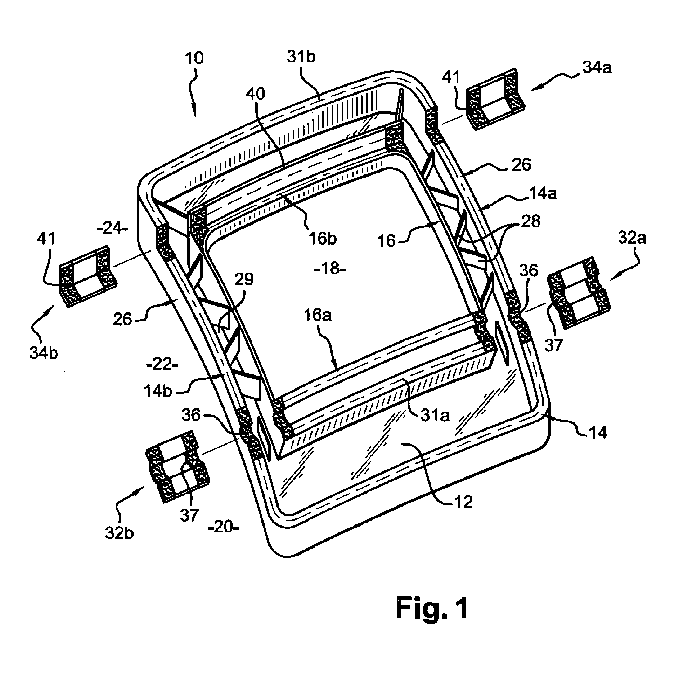

On a représenté sur la figure 1 un caisson 10 de hayon, réalisé en matière plastique. Ce caisson 10 comprend un fond 12 ainsi que des parois 14, 16 délimitant les bords du caisson de hayon, les parois s'étendant essentiellement perpendiculairement au fond et comprenant une extrémité libre destinée à être tournée vers l'extérieur du véhicule lorsque le hayon est monté sur le véhicule.

La paroi 14 forme un cadre extérieur destiné à délimiter les contours du hayon et la paroi 16 forme un cadre intérieur délimitant une ouverture 18 du caisson pour accueillir une lunette destinée à être rapportée sur le caisson par collage (non représentée sur la figure).

Le caisson se divise en trois parties. Il comprend tout d'abord une partie inférieure 20 s'étendant entre la paroi inférieure du cadre extérieur 14 et la paroi inférieure 16a du cadre intérieur 16, cette partie étant destinée à être recouverte par une peau de carrosserie, notamment un bandeau. Il comprend également une partie supérieure 24 s'étendant entre la paroi supérieure 16b du cadre intérieur 16 et la paroi supérieure du cadre extérieur 14. Cette partie est également destinée à être recouverte par une peau de carrosserie, notamment un becquet.

Le caisson comprend également une partie intermédiaire 22 délimitée par les paroi supérieure 16b et inférieure 16a du cadre intérieur 16. Cette partie intermédiaire 22 comprend l'ouverture 18 ainsi que deux montants latéraux 26 reliant les parties inférieures et supérieures 20 et 24. Un montant s'étend de chaque coté de l'ouverture 18.

Chaque montant forme un profilé à section transversale ouverte, notamment en U, dont la concavité est tournée vers l'extérieur du véhicule lorsque le hayon est monté sur le véhicule. Le fond de chaque montant est formé par le fond 12 du caisson et les parois latérales sont formées par une des parois verticales des cadres 14 et 16. Un dégagement 29 est ménagé entre les parois latérales 14 et 16 du montant.

Chaque montant comprend également des nervures de rigidification 28, permettant de rigidifier le caisson de hayon. Chaque nervure 28 forme une paroi en saillie du fond 12 du montant 26 et s'étend entre les parois 14 et 16 du profilé, dans le dégagement 29.

La lunette est destinée à être rapportée sur le caisson 10, de façon à recouvrir l'ouverture 18 et à s'étendre jusqu'à la paroi 14a, 14b des montants appartenant au cadre extérieur 14. Elle recouvre de ce fait les montants 26.

Pour accueillir la lunette, le caisson comprend une piste de collage 30 (représentée en traits mixtes). Cette piste de collage 30 est ménagée sur les extrémités libres des parois supérieure 16b et inférieure 16a du cadre intérieur 16 et également sur les extrémités libres des parois latérales 14a, 14b appartenant au cadre extérieur 14.

Le caisson comprend également deux pistes de collage 31a et 31b, ménagées respectivement dans les parties inférieure 20 et supérieure 24 du caisson, sur une paroi horizontale 16a ou 16b du cadre intérieur et sur le cadre 14, notamment sur les parois verticales 14a, 14b de ce cadre. Ces pistes de collage permettent de rapporter sur le caisson le bandeau en partie inférieure et le becquet en partie supérieure.

Toutefois, du fait de la forme de chaque montant 26, les parois supérieure 16b et inférieure 16a du cadre 16 et les parois verticales 14a et 14b des montants sont séparées par le dégagement. Elles ne se rejoignent donc pas et les pistes de collage 30, 31a, 31b sont donc interrompues.

Pour assurer une meilleure étanchéité du caisson, l'ensemble selon ce mode de réalisation comprend également quatre passerelles destinées à être rapportées sur le caisson, notamment deux passerelles 32a et 32b destinées à être rapportées dans le prolongement de la paroi inférieure 16a du cadre intérieur 16 et deux passerelles 34a et 34b destinées à être rapportées dans le prolongement de la paroi supérieure 16b du cadre intérieur 16.

Le caisson et les passerelles sont conformées pour que les passerelles 32a, 32b, 34a et 34b forment chacune un pont entre une extrémité d'une paroi horizontale 16a, 16b du cadre 16 et une paroi verticale 14a, 14b du cadre 14 en traversant le dégagement. Les passerelles comprennent chacune une face destinée à être tournée vers l'extérieur du véhicule lorsque le hayon est monté sur le véhicule et comportant une portion complémentaire piste de collage, permettant de compléter la piste de collage 30.

Pour accueillir les passerelles 32a et 32b, le caisson comprend un siège 36 constitué par des dépressions ménagées le long de la paroi inférieure 16a du cadre 16 et dans les parois latérales 14a et 14b, ces dépressions étant alignées. Ces dépressions coopèrent avec une saillie 37 de forme complémentaire ménagée sur un côté de la passerelle 32a, 32b destiné à être tourné vers l'intérieur du véhicule. Les dépressions 36 et les saillies 37 forment des moyens de positionnement des passerelles 32a, 32b sur le caisson.

En outre, pour accueillir les passerelles 34a, 34b, la paroi supérieure 16b du cadre 16 et l'extrémité supérieure de la paroi verticale 14 du montant comprennent des saillies 40 alignées, agencées de sorte qu'à leur extrémité supérieure, les parois 14a, 14b et 16b forment un angle droit permettant d'accueillir chacune des passerelles 34a et 34b présentant également un angle droit 41. Les moyens 40, 41 forment des moyens de positionnement des passerelles 34a, 34b sur le caisson.

On a représenté en détail sur les figures 2 et 2bis un autre mode de réalisation d'une passerelle 42 selon l'invention, destinée à être rapportée sur le caisson de la figure 1 dans le prolongement de la paroi inférieure du cadre intérieur 16.

Comme on le voit sur la figure 2, cette passerelle comporte deux parties. Elle comprend notamment une partie centrale 44 rigide et, à chaque extrémité latérale de la pièce destinée respectivement à être en contact avec le cadre intérieur 16 ou le cadre extérieur 14 du caisson, la passerelle 42 comprend une partie souple 46. Cette partie souple forme un joint d'étanchéité travaillant en compression.

Comme on le voit sur les figures 2 à 3, une saillie 48 formée dans la passerelle est parfaitement complémentaire d'une dépression 36 du caisson. La passerelle 42 se positionne donc facilement sur le caisson. La pièce 42, lorsqu'elle est mise en place sur le caisson, permet de fermer localement le profilé en U formé par chacun des montants 26 en traversant le dégagement 29 de celui-ci. Elle relie donc localement le cadre 14 et le cadre 16.

La face de la pièce 42 visible sur les figures 2 et 2bis comprend une portion complémentaire de piste de collage 30bis représentée en traits mixtes, et destinée à combler l'interruption de la piste de collage 30. Cette portion de piste de collage 30bis est agencée sur la passerelle 42 pour être dans le prolongement de la piste de collage 30 du caisson, comme on le voit plus particulièrement à la figure 2bis.

De même, la passerelle comprend une portion complémentaire de piste de collage 31bis destinée à combler l'interruption de la piste de collage 31a du bandeau, et agencée sur la passerelle 42 pour être dans le prolongement de la piste 31a du caisson. Les pistes 30bis et 31 bis sont parallèles entre elles, tout comme les pistes de collage 30 et 31a du caisson.

Chaque joint 46 forme une extrémité des portions de piste de collage 30bis et 31 bis et s'étend également entre deux extrémités adjacentes de ces portions situées à une même extrémité de la passerelle, pour former une partie extrême de la saillie 48, de façon à améliorer encore l'étanchéité de la liaison de la passerelle et du caisson.

Comme on le voit sur la figure 2, la pièce 42 comprend en outre un orifice 50. Cet orifice 50 forme des moyens de positionnement, et, plus particulièrement des moyens de centrage, de la lunette. Il est destiné à coopérer avec un doigt de positionnement ménagé dans la lunette.

Un orifice tel que l'orifice 50 peut être ménagé dans deux pièces destinées à être placées sur le caisson, notamment les deux pièces destinées à être placées dans le prolongement de la paroi inférieure 16a du cadre 16. L'orifice de l'une des deux passerelles est de forme complémentaire du doigt de positionnement de la lunette, l'orifice de l'autre des deux pièces étant conformé pour que le doigt de positionnement puisse prendre plusieurs positions dans l'orifice, pour tenir compte de la dispersion de la lunette.

Comme on le voit sur la figure 3 montrant l'autre côté de la passerelle de la figure 2, destiné à être tourné vers l'intérieur du véhicule, la partie rigide 44 de cette pièce 42 comprend en outre une partie 52 en saillie comportant à son extrémité une rainure 54. Cette rainure 54 est destinée à accueillir une agrafe métallique (non représentée sur la figure) apte à se planter dans une nervure 56 ménagée à cet effet sur le caisson et représentée à la figure 2bis.

L'agrafe forme un moyen de pré-maintien de la pièce sur le caisson.

On a également représenté, à la figure 4, une passerelle 60 destinée à être agencée dans le prolongement de la paroi supérieure 16b du cadre 16. Cette passerelle comprend deux parois 62, 64 formant entre elles un angle droit. Chacune de ces parois comprend également une partie rigide 66 et, à chacune de ses extrémités destinée à être respectivement en contact avec les cadres 14 et 16, une partie souple 68 formant joint d'étanchéité.

Cette passerelle comprend également, sur un côté destiné à être tourné vers l'extérieur du véhicule lorsque le hayon est monté sur le véhicule, deux portions de piste de collage 30bis, 31ter ménagées respectivement sur chacune des parois 62, 64. La portion de piste de collage 30bis ménagée sur la paroi 62 est représentée en traits mixtes et est destinée à accueillir la lunette. Elle est agencée sur la passerelle pour être dans le prolongement de la piste de collage 30 du caisson et est prévue pour combler l'interruption de cette piste 30. La portion de piste de collage 31 ter est représentée en pointillés et est destinée à accueillir le becquet. Elle est agencée sur la pièce pour être dans le prolongement de la piste de collage 31b du caisson prévue pour combler l'interruption de cette piste 31ter.

Cette pièce comprend également une dépression 70, formée dans la paroi 64 et permettant, par coopération avec une languette du becquet ayant une hauteur supérieure à la profondeur de la dépression, de marquer l'entretoisement entre la piste de collage 31b, 31 ter et la peau de carrosserie.

La pièce de l'ensemble selon l'invention est réalisée par comoulage et est de petite dimension, de préférence de dimensions inférieures à 20 centimètres pour diminuer les coûts de fabrication qu'elle engendre. Le joint et la partie rigide sont tous deux fabriquées en ABS (AcryloButadiène Styrène). En particulier, le joint est réalisé en un mélange d'ABS et d'élastomère. Ces deux parties sont alors compatibles, ce qui facilite l'opération de comoulage.

On va maintenant décrire brièvement le montage du hayon.

Lors d'une première étape, les passerelles sont montées sur le caisson, notamment sur les sièges 36 et 40 du caisson, les agrafes de la passerelle coopérant avec des nervures du caisson. Le caisson est ensuite peint, les passerelles étant peintes en même temps que celui-ci. Cette opération permet d'améliorer l'étanchéité caisson-passerelle puisqu'elle dépose un même film de peinture continu sur la passerelle et le caisson.

Ensuite, la lunette et les peaux de carrosserie sont mises en place par collage sur le caisson et les pièces. La lunette une fois mise en place compresse la partie souple de la pièce contre le caisson, cette partie formant alors un joint sollicité en compression qui permet d'éviter le passage de l'eau entre le caisson et la pièce.

On notera que l'invention ne se limite pas au mode de réalisation décrit précédemment.

Par exemple, la conception des passerelles et du caisson n'est pas limitée aux formes et aux matériaux précédemment décrits.

En outre, au moins une des passerelles peut comprendre une fonction supplémentaire, par exemple une fonction de maintien de câbles installés dans le profilé à l'aide de moyens de clipsage.

En outre, une même passerelle peut fermer la totalité du montant, seulement deux passerelles étant alors nécessaires pour assurer un meilleur collage de la lunette. La passerelle remplit alors une fonction supplémentaire esthétique en cachant le montant, ce qui est conseillé notamment lorsque la lunette peut s'ouvrir.

Il est également possible que la passerelle comprenant une piste de collage pour la lunette soit d'un seul tenant avec la peau de carrosserie et soit constituée par une oreille ménagée dans ladite peau de carrosserie.

## Revendications

1. Ensemble d'un caisson de hayon (10) et d'au moins une passerelle (32a, 32b, 34a, 34b ; 42 ; 60) destinée à être rapportée sur le caisson, **caractérisé en ce que** le caisson est destiné à recevoir une pièce fixée au caisson par collage, ledit caisson comportant à cet effet une piste de collage (30, 31a, 31b), le caisson comportant également au moins un montant latéral (26) comprenant un profilé à section transversale ouverte dont l'ouverture interrompt la piste de collage, et **en ce que** la passerelle comprend une portion complémentaire de piste de collage (30bis, 31bis, 31ter), la passerelle et le montant étant conformés pour que la passerelle puisse être rapportée sur le montant de manière à fermer la section transversale du profilé et à ce que la portion complémentaire comble l'interruption de la piste de collage.

2. Ensemble selon la revendication précédente, dans lequel la passerelle (42 ; 60) comprend au moins un joint d'étanchéité (46 ; 68) constituant une extrémité de la passerelle destinée à accueillir la portion de piste de collage (30bis, 31 bis, 31 ter).

3. Ensemble selon la revendication 2, dans lequel le joint (46 ; 68) est d'un seul tenant avec le reste de la passerelle (42 ; 60), par exemple par comoulage ou par surmoulage.

4. Ensemble selon l'une quelconque des revendications précédentes, dans lequel le caisson (10) et la passerelle (42 ; 60) comprennent des moyens de positionnement (36, 37, 40, 41) de la passerelle sur le caisson.

5. Ensemble selon la revendication précédente, dans lequel la passerelle (42) comprend des moyens de positionnement (50) de la pièce, de préférence des moyens de centrage de la pièce.

6. Ensemble selon l'une quelconque des revendications précédentes, dans lequel le caisson et la passerelle sont recouverts d'un même film de peinture continu, une fois la passerelle mise en place sur le caisson.

7. Ensemble selon l'une quelconque des revendications précédentes, dans lequel la passerelle (42) comprend des moyens de pré-maintien de la passerelle sur le caisson.

8. Ensemble selon l'une quelconque des revendications précédentes, dans lequel le caisson comprend au moins deux pistes de collage (30, 31a, 31b) pour recevoir deux pièces distinctes, la passerelle (42 ; 60) comprenant au moins deux portions de pistes de collage (30bis, 31bis; 30bis, 31ter), complémentaires respectivement des pistes de collage du caisson.

9. Ensemble selon une combinaison des revendications 2 et 8, dans lequel le joint d'étanchéité (46 ; 68) s'étend entre les deux extrémités adjacentes des deux portions de piste de collage (30bis, 31 bis ; 30bis, 31 ter).

10. Ensemble selon l'une quelconque des revendications précédentes, dans lequel la passerelle (60) comprend des moyens d'entretoisement (70) d'une pièce et de la portion de piste de collage (31 ter) destinée à recevoir cette pièce.

11. Ensemble selon l'une quelconque des revendications précédentes, dans lequel la passerelle comprend des moyens de maintien d'au moins un câble installé dans le profilé

12. Ensemble selon l'une quelconque des revendications précédentes, dans lequel la passerelle ferme la section transversale d'au moins un profilé essentiellement sur toute sa longueur.

13. Ensemble selon l'une quelconque des revendications précédentes, dans lequel la passerelle est réalisée au moins partiellement en ABS (AcryloButadiène Styrène).

14. Passerelle (32a, 32b, 34a, 34b ; 42 ; 60) **caractérisée en ce qu'**elle est apte à être rapportée sur un caisson de hayon (10) comportant une piste de collage (30, 31a, 31b) pour recevoir une pièce fixée au caisson par collage et au moins un montant latéral (26) comprenant un profilé à section transversale ouverte dont l'ouverture interrompt la piste de collage, la passerelle comprenant une portion de piste de collage (30bis, 31 bis, 31ter) et étant conformée pour être rapportée sur le montant de sorte qu'elle ferme la section transversale du profilé et que la portion de piste de collage de la passerelle comble l'interruption de la piste de collage du caisson.

## Claims

1. An assembly comprising a tailgate box (10) and at least one link (32a, 32b, 34a, 34b; 42; 60) designed to be fitted on the box, the assembly being **characterized in that** the box is designed to receive a part that is fastened to the box by adhesive, said box having for this purpose an adhesive track (30, 31a, 31b), the box also including at least one lateral upright (26) comprising a section member of open cross-section with the opening therein interrupting the adhesive track, and **in that** the link comprises an additional segment of adhesive track (30bis, 31bis, 31ter), the link and the upright being shaped so that the link can be fitted on the upright in such a manner that it closes the cross-section of the section member and causes the additional segment to span the interruption in the adhesive track.

2. An assembly according to the preceding claim, wherein the link (42; 60) includes at least one sealing gasket (46; 68) constituting an end of the link for receiving the adhesive track segment (30bis, 31bis, 31ter).

3. An assembly according to claim 2, wherein the gasket (46; 68) is made integrally with the remainder of the link (42; 60), e.g. by co-molding or overmolding.

4. An assembly according to any preceding claim, wherein the box (10) and the link (42; 60) include positioning means (36, 37, 40, 41) for positioning the link on the box.

5. An assembly according to the preceding claim, wherein the link (42) includes positioning means (50) for positioning the part, preferably means for centering the part.

6. An assembly according to any preceding claim, wherein the box and the link are covered in a common continuous film of paint once the link has been put into place on the box.

7. An assembly according to any preceding claim, wherein the link (42) includes preparatory holder means for holding the link on the box.

8. An assembly according to any preceding claim, wherein the box includes at least two adhesive tracks (30, 31a, 31b) for receiving two distinct parts, the link (42; 60) including at least two adhesive track segments (30bis, 31bis; 30bis, 31ter) additional to respective ones of the adhesive tracks of the box.

9. An assembly according to claims 2 and 8 in combination, wherein the sealing gasket (46; 68) extends between two adjacent ends of two adhesive track segments (30bis, 31bis; 30bis, 31ter).

10. An assembly according to any preceding claim, wherein the link (60) includes spacer means (70) for spacing a part, and the adhesive track segment (31ter) for receiving said part.

11. An assembly according to any preceding claim, wherein the link includes holder means for holding at least one cable installed in the section member.

12. An assembly according to any preceding claim, wherein the link closes the cross-section of at least one section member essentially over its entire length.

13. An assembly according to any preceding claim, wherein the link is made at least in part out of ABS (acrylobutadiene styrene).

14. A link (32a, 32b, 34a, 34b; 42; 60), **characterized in that** it is suitable for being fitted on a tailgate box (10) having an adhesive track (30, 31a, 31b) for receiving a part that is fastened to the box by adhesive, and at least one lateral upright (26) comprising a section member of open cross-section with its opening interrupting the adhesive track, the link including a segment of adhesive track (30bis, 31bis, 31ter) and being shaped to be fitted on the upright in such a manner that it closes the cross-section of the section member and causes the adhesive track segment of the link to span the interruption in the adhesive track of the box.

## Patentansprüche

1. Anordnung aus einem Heckklappenkasten (10) und mindestens einem Steg (32a, 32b, 34a, 34b; 42; 60), der dazu bestimmt ist, an dem Kasten angebracht zu werden, **dadurch gekennzeichnet, dass** der Kasten dazu bestimmt ist, ein Teil aufzunehmen, das durch Kleben an dem Kasten befestigt ist, wobei der Kasten zu diesem Zweck eine Klebebahn (30, 31a, 31b) aufweist, wobei der Kasten außerdem mindestens einen Seitenholm (26) aufweist, der ein Profilteil mit offenem Querschnitt aufweist, dessen Öffnung die Klebebahn unterbricht, und dadurch, dass der Steg einen komplementären Klebebahnabschnitt (30bis, 31bis, 31ter) aufweist, wobei der Steg und der Seitenholm so ausgebildet sind, dass der Steg an dem Seitenholm auf eine solche Weise angebracht werden kann, dass er den Querschnitt des Profilteils verschließt und dass der komplementäre Klebebahnabschnitt die Unterbrechung der Klebebahn überbrückt.

2. Anordnung nach dem vorhergehenden Anspruch, wobei der Steg (42; 60) mindestens eine Dichtung (46; 68) aufweist, die ein Ende des Steges bildet, das dazu bestimmt ist, den Klebebahnabschnitt (30bis, 31bis, 31ter) aufzunehmen.

3. Anordnung nach Anspruch 2, wobei die Dichtung (46; 68) mit dem restlichen Teil des Steges (42; 60) einstückig ausgebildet ist, zum Beispiel durch Co-Molding oder durch Umspritzen.

4. Anordnung nach einem der vorhergehenden Ansprüche, wobei der Kasten (10) und der Steg (42; 60) Mittel zur Positionierung (36, 37, 40, 41) des Steges an dem Kasten aufweisen.

5. Anordnung nach dem vorhergehenden Anspruch, wobei der Steg (42) Mittel zur Positionierung (50) des Teils aufweist, vorzugsweise Mittel zur Zentrierung des Teils.

6. Anordnung nach einem der vorhergehenden Ansprüche, wobei der Kasten und der Steg mit ein und demselben Lackfilm bedeckt sind, nachdem der Steg an dem Kasten angebracht worden ist.

7. Anordnung nach einem der vorhergehenden Ansprüche, wobei der Steg (42) Mittel zum provisorischen Halten des Steges an dem Kasten aufweist.

8. Anordnung nach einem der vorhergehenden Ansprüche, wobei der Kasten mindestens zwei Klebebahnen (30, 31a, 31b) aufweist, um zwei verschiedene Teile aufzunehmen, wobei der Steg (42; 60) mindestens zwei Klebebahnabschnitte (30bis, 31bis; 30bis, 31ter) aufweist, die jeweils zu einer der Klebebahnen des Kastens komplementär sind.

9. Anordnung nach einer Kombination der Ansprüche 2 und 8, wobei sich die Dichtung (46; 68) zwischen den zwei benachbarten Enden der zwei Klebebahnabschnitte (30bis, 31bis; 30bis, 31ter) erstreckt.

10. Anordnung nach einem der vorhergehenden Ansprüche, wobei der Steg (60) Abstandhaltemittel (70) eines Teils und des Klebebahnabschnitts (31ter), der dazu bestimmt ist, dieses Teil aufzunehmen, aufweist.

11. Anordnung nach einem der vorhergehenden Ansprüche, wobei der Steg Mittel zum Halten mindestens eines Kabels, das in dem Profilteil installiert ist, aufweist.

12. Anordnung nach einem der vorhergehenden Ansprüche, wobei der Steg den Querschnitt mindestens eines Profilteils im Wesentlichen auf dessen gesamter Länge verschließt.

13. Anordnung nach einem der vorhergehenden Ansprüche, wobei der Steg mindestens teilweise aus ABS (Acrylnitril-Butadien-Styrol) hergestellt ist.

14. Steg (32a, 32b, 34a, 34b; 42; 60), **dadurch gekennzeichnet, dass** er dazu geeignet ist, an einem Heckklappenkasten (10) angebracht zu werden, der eine Klebebahn (30, 31a, 31b) zum Aufnehmen eines durch Kleben an dem Kasten befestigten Teils und mindestens einen Seitenholm (26), der ein Profilteil mit offenem Querschnitt aufweist, dessen Öffnung die Klebebahn unterbricht, aufweist, wobei der Steg einen Klebebahnabschnitt (30bis, 31bis, 31ter) umfasst und dafür ausgebildet ist, an dem Seitenholm derart angebracht zu werden, dass er den Querschnitt des Profilteils verschließt und dass der Klebebahnabschnitt des Steges die Unterbrechung der Klebebahn des Kastens überbrückt.
